# EUROPÄISCHE PATENTSCHRIFT

(11) **EP 3 225 856 B1**
(45) Veröffentlichungstag und Bekanntmachung des Hinweises auf die Patenterteilung: **28.11.2018**
(21) Anmeldenummer: 16162736.9
(22) Anmeldetag: 30.03.2016
(51) Int. Cl.: F16B 11/00

(54) **BEFESTIGER**
MOUNTER
DISPOSITIF DE FIXATION

(43) Veröffentlichungstag der Anmeldung: 04.10.2017
(73) Patentinhaber: Aufrecht GmbH, 71563 Affalterbach (DE)
(72) Erfinder: Hardegen, Markus, 73732 Esslingen (DE)
(74) Vertreter: Ruckh, Rainer Gerhard

(56) Entgegenhaltungen:
- EP-A1- 2 154 384
- WO-A1-03/036106
- WO-A1-2012/084476

## Beschreibung

Die Erfindung betrifft einen Befestiger.

Ein derartiger Befestiger ist aus der WO 2012/084476 A1 bekannt. Der dort beschriebene Befestiger besteht aus einem Grundkörper und einem gas- und flüssigkeitsdurchlässigen Material, welcher Mittel zur Aufnahme eines Gegenstandes aufweist, und welcher mittels eines Klebstoffs auf einer Auflagefläche fixierbar ist. An der der Auflagefläche zugewandten Innenseite des Grundkörpers ist eine hydrophile Einlage aufgebracht, der dosiert Feuchtigkeit zugeführt ist und auf welche ein aerober Klebstoff aufbringbar ist. Dieser ist mit der hydrophilen Einlage in einem von der Auflagefläche und dem Grundkörper umschlossenen Hohlraum gasdicht und flüssigkeitsdicht gekapselt.

Mit diesem Befestiger können Gegenstände an Auflageflächen sicher befestigt werden, ohne dass hierzu konstruktive Eingriffe mit Schrauben oder dergleichen in den Auflageflächen oder Gegenständen vorgenommen werden müssen. Ein wesentlicher Aspekt des Befestigers besteht in dem Zusammenwirken des aeroben Klebstoffs mit der hydrophilen Einlage im Befestiger. Durch den Kontakt des aeroben Klebstoffs mit der hydrophilen Einlage, welcher dosiert Feuchtigkeit enthält, härtet der aerobe Klebstoff aus, ohne dass hierzu ein Kontakt mit der Umgebungsluft notwendig wäre.

Durch die flächige Verteilung der Feuchtigkeit über die sich über die gesamte Auflagefläche erstreckende hydrophile Einlage wird jedoch kein optimaler Aushärtungsprozess erzielt, da eine Zudosierung von Feuchtigkeit zu dem Klebstoff nur unzureichend erfolgt, wodurch dessen Aushärtung im gesamten Volumen erschwert bzw. verhindert wird, was zu nicht zufriedenstellenden Befestigungskräften führt.

Die EP 2 154 384 A1 betrifft ein Befestigungselement zur ortsfesten Anbringung von Gegenständen, wie Handtuchhaltern, Regalen, Leuchten oder dgl. Ausstattungsartikeln an einer Wand, Decke oder dgl. Fläche, insbesondere in mit Kacheln, Marmorplatten oder mit dgl. Wandverkleidungen ausgestatteten Räumen. Das Befestigungselement umfasst einen Grundkörper, der zur Aufnahme eines Elementes zur Halterung des Gegenstandes ausgebildet ist, wobei der Grundkörper mittels eines aushärtbaren Haft- und Verbindungsmittels an der Wand befestigbar ist. Der Grundkörper ist wenigstens teilweise derart als Wasserreservoir ausgebildet, dass das Haft- und Verbindungsmittel zum Aushärten Feuchtigkeit aus dem Wasserreservoir erhalten kann, sodass der Aushärteprozess beschleunigbar ist.

Die WO 03/036 106 A1 betrifft ein Montagesystem zur Anbringung von Befestigungselementen an einer Wand. Um insbesondere in mit Kacheln, Fliesen oder dergleichen Wandverkleidungen ausgestatteten Räumen kostengünstig und mit einfachen Mitteln Befestigungselemente leicht zu montieren, wird ein Montagesystem vorgeschlagen, welches einen Grundkörper als Befestigungselement besitzt, welches mindestens eine Einfüllöffnung zur Einbringung eines Haft- bzw. Verbindungsmittels zwischen Wand und Befestigungselement aufweist und zudem Steigöffnungen zum Durchtreten und Verteilen des Haft- und Verbindungsmittels besitzt. Der Grundkörper und/oder die der Wand zugewandte Rückseite des Grundkörpers sind speziell flüssigkeits- und gasdurchlässig gestaltet.

Der Erfindung liegt die Aufgabe zugrunde, einen Befestiger der eingangs genannten Art auszubilden, welcher bei hoher Funktionalität und Funktionssicherheit einfach handhabbar und flexibel einsetzbar ist.

Zur Lösung dieser Aufgabe sind die Merkmale des Anspruchs 1 vorgesehen. Vorteilhafte Ausführungsformen der Erfindung sind in den Unteransprüchen beschrieben.

Der erfindungsgemäße Befestiger weist einen Grundkörper auf, dessen Außenseiten mit Ausnahme einer Befestigungsseite, die zur Befestigung an einem Gegenstand dient, diffusionsdicht verschlossen sind. Der Grundkörper weist eine diskrete Anordnung von an der Befestigungsseite ausmündenden Reservoirs auf, welche ein Füllmittel mit einem hydrophilen Stoff und/oder Feuchtigkeit aufweisen. Auf die Befestigungsseite ist ein aerober Klebstoff aufbringbar, wobei mittels des Füllmittels ein Aushärten des aeroben Klebstoffs bewirkt wird.

Der erfindungsgemäße Befestiger bildet ein Befestigungsmittel, mit dem eine Befestigung an Gegenständen ohne konstruktive Eingriffe wie zum Beispiel Schraubverbindungen erreicht wird.

Der aerobe Klebstoff an der Befestigungsseite des Befestigers ist dann diffusionsdicht, das heißt flüssigkeits- und gasdicht gekapselt, wenn dieser auf den zu fixierenden Gegenstand aufgesetzt ist. Damit erfolgt der Aushärtungsprozess des aeroben Klebstoffs unabhängig von Umgebungsbedingungen wie zum Beispiel Luftfeuchtigkeit der Umgebungsluft.

Ein wesentlicher Aspekt der Erfindung besteht darin, dass an der Befestigungsseite des Befestigers mehrere Reservoirs ausmünden, die mit Füllmaterial befüllt sind. Dabei ist das Füllmaterial so beschaffen, dass dieses den Aushärtungsprozess des aeroben Klebstoffs fördert bzw. beschleunigt. Die Befüllung kann generell bereits im Herstellungsprozess des Befestigers erfolgen. Alternativ kann die Befüllung auch erst bei Gebrauch des Befestigers erfolgen.

Wesentlich hierbei ist, dass das Füllmittel nicht vollflächig über die gesamte Befestigungsseite verteilt ist. Vielmehr ist an der Befestigungsseite ausmündend eine diskrete Anordnung von Reservoirs vorgesehen, das heißt die Reservoirs sind in vorgegebenen Abständen zueinander angeordnet. Aus diesen Reservoirs wird dem aeroben Klebstoff genau die für die Aushärtung benötigte Menge an Füllmittel zugeführt, so dass der Aushärtungsprozess gleichförmig im gesamten Volumen der Klebstoffschicht erfolgen kann, wodurch eine sehr stabile Verbindung zwischen Befestiger und Gegenstand erhalten wird. Die kontrollierte Füllmittelzufuhr zu dem aeroben Klebstoff ist dadurch gegeben, dass in den Reservoirs jeweils lokal ein Überschuss an Füllmittel vorhanden ist. Durch den Kontakt von aerobem Klebstoff und Füllmittel an den Öffnungen der Reservoirs wird dem aeroben Klebstoff selbsttätig Füllmittel zugeführt, wobei durch die begrenzten Querschnitte und die begrenzte Anzahl von Reservoirs nicht nur eine mengenmäßige sondern auch zeitliche Dosierung der Zufuhr von Füllmittel zum aeroben Klebstoff gegeben ist.

Gemäß einer vorteilhaften Ausführungsform der Erfindung ist der aerobe Klebstoff von silanen Polymeren gebildet. Alternativ kann als aerober Klebstoff auch Polyurethan verwendet werden.

Weiterhin vorteilhaft ist der hydrophile Stoff von Baumwolle, einem Faserverbundstoff, einem Salz, einem Mineral oder einem Harz gebildet.

Der hydrophile Stoff kann in fester, flüssiger oder gelartiger Form vorliegen.

Alternativ oder zusätzlich enthält das Füllmittel Feuchtigkeit oder wird diesem Füllmittel Feuchtigkeit zugeführt.

Dabei ist die Feuchtigkeit von Wasser oder Isopropanol gebildet, welches in flüssiger Form oder in Gelform vorliegt.

Generell kann das Füllmittel auch Glycerin oder Propylenglykol enthalten oder daraus bestehen.

Gemäß einer ersten Variante der Erfindung ist in den Reservoirs als Füllmittel ein Feuchtigkeit enthaltender hydrophiler Stoff gelagert.

Insbesondere ist das Füllmittel in die Reservoirs eingepresst.

In diesem Fall ist das Füllmittel, das im Reservoir gelagert ist, ohne Zugabe weiterer Stoffe bereit mit dem aeroben Klebstoff so zu reagieren, dass dieser aushärten kann. Zur Befestigung des Befestigers braucht somit nur noch der aerobe Klebstoff auf die Befestigungsseite des Befestigers aufgebracht werden und auf den Gegenstand aufgesetzt werden. Beispielsweise kann das Füllmittel Mineralien als hydrophilen Stoff enthalten, denen als Feuchtigkeit Wasser oder Isopronal zugeführt sind.

Gemäß einer zweiten Variante der Erfindung ist in den Reservoirs ein hydrophiler Stoff eingelagert, welcher keine Feuchtigkeit enthält. Dem hydrophilen Stoff wird nachträglich Feuchtigkeit zugeführt.

Insbesondere ist der hydrophile Stoff in den Reservoirs eingepresst.

In diesem Fall ist der hydrophile Stoff so beschaffen, dass er alleine noch nicht mit dem aeroben Klebstoff reagieren kann, so dass er aushärten kann. Beispiele hierfür sind Salze oder Mineralien, denen komplett die Feuchtigkeit entzogen ist. Erst durch die Zugabe von Feuchtigkeit wie Wasser oder Isopronal entsteht ein Gemisch von hydrophilem Stoff und Feuchtigkeit, das mit dem aeroben Klebstoff reagieren kann. Zur Befestigung des Befestigers wird daher bei dieser Variante zuerst Feuchtigkeit zu dem in den Reservoirs eingelagerten hydrophilen Stoff gegeben und dann erst der aerobe Klebstoff auf die Befestigungsseite aufgetragen.

Gemäß einer dritten Variante der Erfindung ist in den Reservoirs als Füllmittel ein hydrophiler Stoff eingelagert, insbesondere eingepresst, welcher sich in Kontakt mit Feuchtigkeit erhitzt.

Insbesondere ist der hydrophile Stoff von einem Zeolith gebildet.

In diesem Fall ist der hydrophile Stoff, der insbesondere von Zeolith-Pulver gebildet ist, ohne Feuchtigkeitsgehalt in den Reservoirs eingelagert. Bevor der aerobe Klebstoff auf die Befestigungsseite aufgetragen wird, wird dem hydrophilen Stoff Feuchtigkeit, insbesondere Wasser zugeführt. Danach erhitzt sich der hydrophile Stoff. Durch diese Wärmeentwicklung wird die Reaktion des hydrophilen Stoffs mit dem nachfolgend aufgetragenen aeroben Klebstoff beschleunigt, wodurch die Aushärtezeit des aeroben Klebstoffs verkürzt wird.

Anstelle von einem Zeolith kann auch ein Salz mit entsprechenden Eigenschaften eingesetzt werden.

Gemäß einer vierten Variante der Erfindung sind die Reservoirs des Befestigers zunächst leer und werden vor Gebrauch des Befestigers mit Feuchtigkeit, insbesondere Wasser, befüllt.

Gemäß einer konstruktiv vorteilhaften Ausgestaltung der Erfindung sind die Reservoirs von hohlzylindrischen Ausnehmungen im Grundkörper gebildet.

In den so ausgebildeten Reservoirs kann lokal ein Überschuss an Füllmittel angesammelt werden, so dass aus den Reservoirs eine kontrollierte Zufuhr von Füllmittel zum aeroben Klebstoff erfolgt.

Vorteilhaft weisen die Reservoirs identische Formen auf.

Zudem sind die Reservoirs im Wesentlichen gleichförmig über die gesamte Befestigungsseite verteilt.

Durch diese konstruktiven Maßnahmen ist gewährleitet, dass das Füllmittel dem aeroben Klebstoff gleichmäßig über die gesamte Befestigungsseite zugeführt wird.

Gemäß einer vorteilhaften Weiterentwicklung der Erfindung schließt an den äußeren Rand der Befestigungsseite ein Überlaufkanal an, welcher sich über den gesamten Umfang der Befestigungsseite erstreckt.

Dabei ist der Überlaufkanal an seiner Außenseite von einem Randsegment des Grundkörpers begrenzt, welcher über die Befestigungsseite hervorsteht.

Der Überlaufkanal verhindert bei Auftragen des aeroben Klebstoffs auf die Befestigungsseite, dass der aerobe Klebstoff über den Rand des Grundkörpers auf dessen äußere Mantelfläche überläuft.

Weiter vorteilhaft ist auf die freiliegende Stirnseite des Randsegments ein Klebemittel aufgebracht.

Insbesondere ist das Klebemittel ein Klebeband.

Das Klebemittel bildet ein Mittel zur Vorfixierung des Befestigers, das den Befestiger am Gegenstand sicher festhält, bis der aerobe Klebstoff ausgehärtet ist und die bleibende Fixierung des Befestigers am Gegenstand übernimmt.

Gemäß einer vorteilhaften Ausgestaltung der Erfindung ist der Befestiger ein Adapter, an welchem ein Objekt anbringbar ist.

Beispielsweise kann der Adapter an einer den Gegenstand bildenden Wand eines Raumes eines Gebäudes, beispielsweise eines Badezimmers, fixiert werden. An dem Adapter können dann Objekte wie zum Beispiel Gelenke, Haken und dergleichen befestigt werden, die wiederum Einrichtungsgegenstände und dergleichen tragen können.

Die Erfindung wird im Folgenden anhand der Zeichnungen erläutert. Es zeigen:
- Figur 1:: Erstes Ausführungsbeispiel des erfindungsgemäßen Befestigers.
- Figur 2:: Teildarstellung des Befestigers gemäß Figur 1 in einem Längsschnitt mit einem ersten Füllmittel im Reservoir des Befestigers.
a) vor Auftragen von aerobem Klebstoff auf die Befestigungsseite des Befestigers.
b) nach Auftragen von aerobem Klebstoff auf die Befestigungsseite des Befestigers.
- Figur 3:: Teildarstellung des Befestigers gemäß Figur 1 in einem Längsschnitt mit einem zweiten Füllmittel im Reservoir des Befestigers
a) vor Auftragen von aerobem Klebstoff auf die Befestigungsseite des Befestigers.
b) nach Auftragen von aerobem Klebstoff auf die Befestigungsseite des Befestigers.
- Figur 4:: Teildarstellung des Befestigers gemäß Figur 1 in einem Längsschnitt mit einem dritten Füllmittel im Reservoir des Befestigers
a) vor Auftragen von aerobem Klebstoff auf die Befestigungsseite des Befestigers.
b) nach Auftragen von aerobem Klebstoff auf die Befestigungsseite des Befestigers.
- Figur 5:: Zweites Ausführungsbeispiel des erfindungsgemäßen Befestigers.
- Figur 6:: Drittes Ausführungsbeispiel des erfindungsgemäßen Befestigers.
- Figur 7:: Viertes Ausführungsbeispiel des erfindungsgemäßen Befestigers.

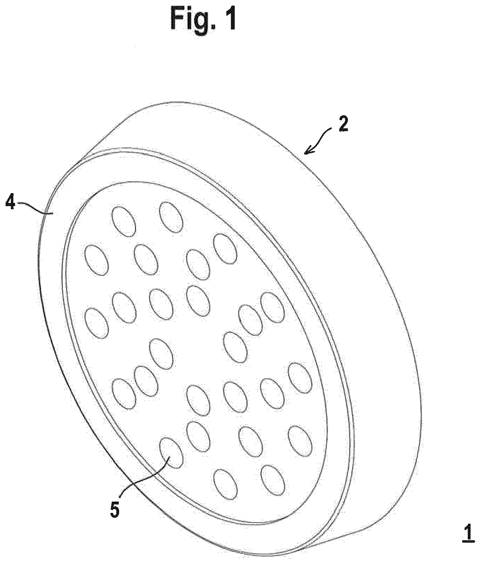

Die Figur 1 zeigt ein erstes Ausführungsbeispiel eines Befestigers 1, der insbesondere als Adapter ausgebildet sein kann. Der Befestiger 1 weist einen Grundkörper 2 aus diffusionsdichtem, das heißt gas- und flüssigkeitsdichtem Material auf. Der Grundkörper 2 besteht aus einem metallischen Werkstoff wie zum Beispiel Aluminium, Zink-Druckguß oder einem Kunststoff.

Der Grundkörper 2 weist einen kreisförmigen Querschnitt auf, wobei dessen Bodenfläche und dessen äußere Mantelfläche vollständig geschlossene, diffusionsdichte Oberflächen ausbilden. Die der Bodenfläche gegenüberliegende Seite des Grundkörpers 2 bildet eine Befestigungsseite 3 mit der der Befestiger 1 an einem Gegenstand wie zum Beispiel einer Wand eines Gebäudes befestigt wird. Die Befestigungsseite 3 bildet eine im Wesentlichen kreisförmige ebene Fläche. Der obere Rand der zylindrischen Außenwand bildet ein Randsegment 4 aus, das geringfügig über die Befestigungsseite 3 hervorsteht. Die Oberseite des Randsegments 4 bildet eine ebene Auflagefläche aus, mit der der Befestiger 1 auf den Gegenstand aufgesetzt werden kann.

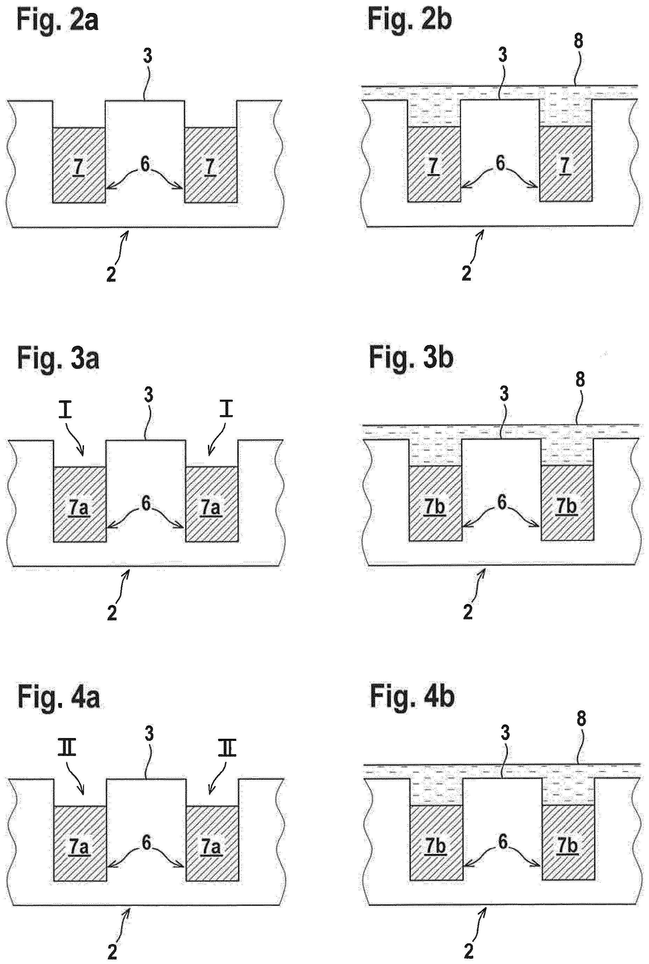

Wie Figur 1 zeigt, ist die Befestigungsseite 3 mit einer diskreten Anordnung von Öffnungen 5 durchsetzt, die im Wesentlichen gleichförmig, das heißt in im Wesentlichen gleichen Abständen zueinander über die gesamte Befestigungsseite 3 verteilt sind. Die Öffnungen 5 bilden Ausmündungen von Reservoirs 6, die in den Figuren 2 bis 4 dargestellt sind.

Die Reservoirs 6 bilden hohlzylindrische, im vorliegenden Fall kreiszylindrische Ausnehmungen im Grundkörper 2 aus. Die Reservoirs 6 des Grundkörpers 2 sind jeweils identisch ausgebildet. Dabei verlaufen die Längen der Reservoirs 6 senkrecht zur Befestigungsseite 3.

Wie in den Figuren 2 bis 4 für verschiedene Varianten der Erfindung dargestellt, ist in den Reservoirs 6 ein Füllmittel 7, 7a, 7b eingelagert. Wird zur Befestigung ein aerober Klebstoff auf die Befestigungsseite 3 aufgetragen, so kommt dieser in Kontakt mit dem in den Reservoirs 6 eingelagerten Füllmittel 7, 7a, 7b. Das Füllmittel 7, 7a, 7b fördert und beschleunigt den Aushärtungsprozess des aeroben Klebstoffs, so dass der aerobe Klebstoff in seinem gesamten Volumen aushärtet. Der aerobe Klebstoff wird so auf die Befestigungsseite 3 aufgetragen, dass er eine Schicht bildet, die nicht oder nicht nennenswert über das Randsegment 4 des Grundkörpers 2 hervorsteht. Dann wird der Befestiger 1 mit der auf der Befestigungsseite 3 aufgebrachten Schicht von aerobem Klebstoff auf den Gegenstand aufgesetzt. Die Klebstoffschicht 8 ist damit gegen die Umgebung diffusionsdicht gekapselt, so dass der Aushärtungsprozess unabhängig von äußeren Umgebungseinflüssen ist.

Der aerobe Klebstoff ist bevorzugt von einem silanen Polymer, insbesondere einem silanen MS-Polymer oder Polyurethan gebildet.

Das Füllmittel 7, 7a, 7b ist von wenigstens einem hydrophilen Stoff und/oder Feuchtigkeit gebildet.

Vorteilhaft ist der hydrophile Stoff von Baumwolle, einem Faserverbundstoff, einem Salz, einem Mineral oder einem Harz gebildet.

Weiterhin ist die Feuchtigkeit von Wasser oder Isopropanol gebildet, welches in flüssiger Form oder in Gelform vorliegt.

Die Figuren 2a, 2b zeigen eine erste Variante der Erfindung. Bei der Anordnung von Figur 2a ist in allen Reservoirs 6 als Füllmittel 7a ein hydrophiler Stoff eingelagert, dem Feuchtigkeit zugeführt ist. Beispielsweise ist als hydrophiler Stoff ein Salz oder Mineral vorgesehen, dem Wasser als Feuchtigkeit zugeführt ist. Das so gebildete Füllmittel 7a kann insbesondere in die Reservoirs 6 eingepresst sein, so dass dieses unverlierbar im Grundkörper gelagert ist.

Der Feuchtigkeit enthaltende hydrophile Stoff bildet ein Füllmittel 7b, das unmittelbar mit dem aeroben Klebstoff reagieren kann, so dass dieser aushärtet, Wenn, wie Figur 2b zeigt, der aerobe Klebstoff als Klebstoffschicht 8 auf die Befestigungsseite 3 aufgebracht ist, dringt der aerobe Klebstoff in die Reservoirs 6 ein und kommt in Kontakt mit dem Füllmittel 7b. Ist die so gebildete Anordnung auf den Gegenstand aufgebracht, wird Feuchtigkeit vom Füllmittel 7b in die Klebstoffschicht transportiert, so dass der aerobe Klebstoff in seinem gesamten Volumen aushärten kann.

Die Figuren 3a, 3b zeigen eine zweite Variante der Erfindung. Wie Figur 3 a zeigt, ist in allen Reservoirs 6 ein Füllmittel 7a enthalten, das keine Feuchtigkeit enthält. Wie in Figur 3a mit dem mit I bezeichneten Pfeil dargestellt, wird dem Füllmittel 7a in den Reservoirs 6 nachträglich Feuchtigkeit, zum Beispiel Wasser oder Isopropanol, zugegeben. Damit wird als Füllmittel 7b ein Feuchtigkeit enthaltender hydrophiler Stoff erhalten (Figur 3b). Danach wird eine Klebstoffschicht 8 auf die Befestigungsseite 3 aufgebracht, so dass der aerobe Klebstoff in Kontakt mit dem Füllmittel 7b in Form von Feuchtigkeit enthaltendem hydrophilem Stoff kommt, so dass der aerobe Klebstoff aushärten kann.

Die Figuren 4a, 4b zeigen eine dritte Variante der Erfindung. Entsprechend der Ausführungsform der Figuren 3a, 3b ist in den Reservoirs 6 in hydrophiler Stoff, der keine Feuchtigkeit enthält, als Füllmittel 7a eingelagert, insbesondere eingepresst. Im vorliegenden Fall besteht der hydrophile Stoff aus einem Material, das sich bei Feuchtigkeitszugabe erhitzt. Vorteilhaft besteht das Füllmittel 7a aus einem Zeolith-Pulver.

Bei dieser Ausführungsform wird dem Füllmittel 7a wieder Feuchtigkeit zugegeben (Pfeil II in Figur 4a) und unmittelbar danach eine Klebstoffschicht 8 aufgetragen (Figur 4b). Die durch die Feuchtigkeitszufuhr bewirkte Wärmeentwicklung im Füllmittel 7b beschleunigt den Aushärtungsprozess des aeroben Klebstoffs.

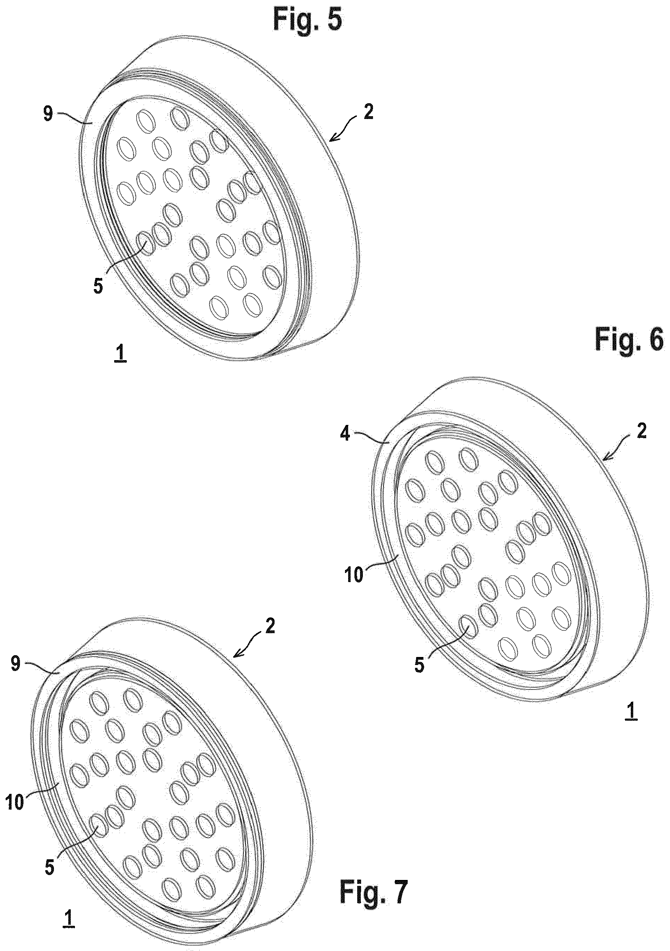

Figur 5 zeigt eine weitere Ausführungsform des Befestigers 1. Dieser Befestiger 1 unterscheidet sich von der Ausführungsform der Figur 1 nur dadurch, dass auf die Auflagefläche des über die Befestigungsseite 3 hervorstehenden Randsegments 4 des Grundkörpers 2 ein Klebemittel in Form eines doppelseitigen Klebebandes 9 aufgebracht ist. Das Klebeband 9 dient als Mittel zur Vorfixierung des Befestigers 1 am Gegenstand.

Figur 6 zeigt eine weitere Ausführungsform des Befestigers 1. Dieser Befestiger 1 unterscheidet sich von der Ausführungsform der Figur 1 nur dadurch, dass zwischen dem Rand der Befestigungsseite 3 und dem Randsegment 4 des Grundkörpers 2 ein Überlaufkanal 10 vorgesehen ist. Der Überlaufkanal 10 bildet eine Vertiefung aus, die sich mit konstantem Querschnitt entlang des gesamten Umfangs der Befestigungsseite 3 erstreckt. Der Überlaufkanal 10 verhindert ein Überlaufen des aeroben Klebstoffs über das Randsegment 4, wenn der aerobe Klebstoff auf die Befestigungsseite 3 aufgetragen wird.

Die Ausführungsform des Befestigers 1 gemäß Figur 7 stellt eine Kombination der Ausführungsformen der Figuren 5 und 6 dar, das heißt der Befestiger 1 gemäß Figur 7 weist sowohl ein Klebeband 9 auf dem Randsegment 4 des Grundkörpers 2 als auch einen Überlaufkanal 10 auf.

### Bezugszeichenliste

- (1): Befestiger
- (2): Grundkörper
- (3): Befestigungsseite
- (4): Randsegment
- (5): Öffnung
- (6): Reservoir
- (7): Füllmittel mit Feuchtigkeit
- (7a): Füllmittel ohne Feuchtigkeit
- (7b): Füllmittel ohne Feuchtigkeit
- (8): Klebstoffschicht
- (9): Klebeband
- (10): Überlaufkanal

## Patentansprüche

1. Befestiger mit einem Grundkörper (2), dessen Außenseiten mit Ausnahme einer Befestigungsseite (3), die zur Befestigung an einem Gegenstand dient, diffusionsdicht verschlossen sind, wobei der Grundkörper (2) eine diskrete Anordnung von an der Befestigungsseite (3) ausmündenden Reservoirs (6) aufweist, welche ein Füllmittel (7, 7a, 7b) mit einem hydrophilen Stoff und/oder Feuchtigkeit aufweisen, und auf die Befestigungsseite (3) ein aerober Klebstoff aufbringbar ist, wobei mittels des Füllmittels (7, 7a, 7b) ein Aushärten des aeroben Klebstoff bewirkt wird.

2. Befestiger nach Anspruch 1, **dadurch gekennzeichnet, dass** der aerobe Klebstoff von silanen Polymeren oder von Polyurethan gebildet ist.

3. Befestiger nach einem der Ansprüche 1 oder 2, **dadurch gekennzeichnet, dass** der hydrophile Stoff von Baumwolle, einem Faserverbundstoff, einem Salz, einem Mineral oder einem Harz gebildet ist.

4. Befestiger nach einem der Ansprüche 1 bis 3, **dadurch gekennzeichnet, dass** das Füllmittel (7, 7a, 7b) Feuchtigkeit enthält oder dass dem Füllmittel (7, 7a, 7b) Feuchtigkeit zugeführt ist.

5. Befestiger nach Anspruch 4, **dadurch gekennzeichnet, dass** die Feuchtigkeit von Wasser oder Isopropanol gebildet ist, welches in flüssiger Form oder in Gelform vorliegt.

6. Befestiger nach einem der Ansprüche 1 bis 5, **dadurch gekennzeichnet, dass** in den Reservoirs (6) als Füllmittel (7, 7a, 7b) ein Feuchtigkeit enthaltender hydrophiler Stoff gelagert ist.

7. Befestiger nach Anspruch 6, **dadurch gekennzeichnet, dass** das Füllmittel (7, 7a, 7b) in die Reservoirs (6) eingepresst ist.

8. Befestiger nach einem der Ansprüche 1 bis 5, **dadurch gekennzeichnet, dass** in den Reservoirs (6) ein hydrophiler Stoff eingelagert ist, welcher keine Feuchtigkeit enthält, und dass dem hydrophilen Stoff nachträglich Feuchtigkeit zugeführt wird.

9. Befestiger nach Anspruch 8, **dadurch gekennzeichnet, dass** der hydrophile Stoff in den Reservoirs (6) eingepresst ist.

10. Befestiger nach einem der Ansprüche 1 bis 3, **dadurch gekennzeichnet, dass** in den Reservoirs (6) als Füllmittel (7, 7a, 7b) ein hydrophiler Stoff eingelagert, insbesondere eingepresst ist, welcher sich in Kontakt mit Feuchtigkeit erhitzt.

11. Befestiger nach Anspruch 10, **dadurch gekennzeichnet, dass** der hydrophile Stoff von einem Zeolith gebildet ist.

12. Befestiger nach einem der Ansprüche 1 bis 11, **dadurch gekennzeichnet, dass** die Reservoirs (6) von hohlzylindrischen Ausnehmungen im Grundkörper (2) gebildet sind.

13. Befestiger nach einem der Ansprüche 1 bis 12, **dadurch gekennzeichnet, dass** die Reservoirs (6) identische Formen aufweisen.

14. Befestiger nach einem der Ansprüche 1 bis 13, **dadurch gekennzeichnet, dass** an den äußeren Rand der Befestigungsseite (3) ein Überlaufkanal (10) anschließt, welcher sich über den gesamten Umfang der Befestigungsseite (3) erstreckt.

15. Befestiger nach Anspruch 14, **dadurch gekennzeichnet, dass** der Überlaufkanal (10) an seiner Außenseite von einem Randsegment (4) des Grundkörpers (2) begrenzt ist, welcher über die Befestigungsseite (3) hervorsteht.

16. Befestiger nach Anspruch 15, **dadurch gekennzeichnet, dass** auf die freiliegende Stirnseite des Randsegments (4) ein Klebemittel aufgebracht ist.

17. Befestiger nach Anspruch 16, **dadurch gekennzeichnet, dass** das Klebemittel ein Klebeband (9) ist.

18. Befestiger nach einem der Ansprüche 1 bis 17, **dadurch gekennzeichnet, dass** dieser ein Adapter ist, an welchen ein Objekt anbringbar ist.

## Claims

1. Mounting device with a base body (2), the outer sides of which are diffusion-tightly closed with the exception of a fastening side serving for fastening to an article, wherein the base body (2) has a discrete arrangement of reservoirs (6), which communicate with the fastening side (3) and which have a filling medium (7, 7a, 7b) with a hydrophilic substance and/or moisture, and an aerobic adhesive can be applied to the fastening side (3), wherein hardening of the aerobic adhesive is produced by way of the filling medium (7, 7a, 7b).

2. Mounting device according to claim 1, **characterised in that** the aerobic adhesive is formed by silane polymers or by polyurethane.

3. Mounting device according to one of claims 1 and 2, **characterised in that** the hydrophilic substance is formed by cotton, a fibre composite, a salt, a mineral or a resin.

4. Mounting device according to any one of claims 1 to 3, **characterised in that** the filling medium (7, 7a, 7b) contains moisture or moisture is supplied to the filling medium (7, 7a, 7b).

5. Mounting device according to claim 4, **characterised in that** the moisture is formed by water or isopropanol present in liquid form or in gel form.

6. Mounting device according to any one of claims 1 to 5, **characterised in that** a hydrophilic substance containing moisture is stored in the reservoir (6) as filling medium (7, 7a, 7b).

7. Mounting device according to claim 6, **characterised in that** the filling medium (7, 7a, 7b) is forced into the reservoir (6).

8. Mounting device according to any one of claims 1 to 5, **characterised in that** a hydrophilic substance not containing any moisture is stored in the reservoir (6) and that moisture is subsequently supplied to the hydrophilic substance.

9. Mounting device according to claim 8, **characterised in that** the hydrophilic substance is forced into the reservoir (6).

10. Mounting device according to any one of claims 1 to 3, **characterised in that** a hydrophilic substance which heats when in contact with moisture is stored, in particular forced into, the reservoir (6) as filling medium (7, 7a, 7b).

11. Mounting device according to claim 10, **characterised in that** the hydrophilic substance is formed by a zeolite.

12. Mounting device according to any one of claims 1 to 11, **characterised in that** the reservoir (6) is formed by hollow-cylindrical recesses in the base body (2).

13. Mounting device according to any one of claims 1 to 12, **characterised in that** the reservoirs (6) have identical shapes.

14. Mounting device according to any one of claims 1 to 13, **characterised in that** an overflow channel (10) is connected with the outer edge of the fastening side (3) and extends over the entire circumference of the fastening side (3).

15. Mounting device according to claim 14, **characterised in that** the overflow channel (10) is bounded at its outer side by an edge segment (4), which projects beyond the fastening side (3), of the base body (2).

16. Mounting device according to claim 15, **characterised in that** an adhesive is applied to the free end of the edge segment (4).

17. Mounting device according to claim 16, **characterised in that** the adhesive is an adhesive strip (9).

18. Mounting device according to any one of claims 1 to 17, **characterised in that** this is an adapter at which an object can be mounted.

## Revendications

1. Dispositif de fixation muni d'un corps de base (2) dont les faces extérieures, à l'exception d'une face de fixation (3) servant à la fixation à un objet, sont obturées avec étanchéité prévenant une diffusion, ledit corps de base (2) étant pourvu d'un ensemble de réservoirs distincts (6) qui débouchent au niveau de ladite face de fixation (3) et renferment un agent de comblement (7, 7a, 7b) composé d'une substance hydrophile et/ou d'humidité, un adhésif aérobie pouvant être déposé sur ladite face de fixation (3), et un durcissement dudit adhésif aérobie étant provoqué au moyen dudit agent de comblement (7, 7a, 7b).

2. Dispositif de fixation selon la revendication 1, **caractérisé par le fait que** l'adhésif aérobie consiste en des polymères de silane ou en du polyuréthane.

3. Dispositif de fixation selon l'une des revendications 1 ou 2, **caractérisé par le fait que** la substance hydrophile consiste en du coton, en un composite fibreux, en un sel, en un minéral ou en une résine.

4. Dispositif de fixation selon l'une des revendications 1 à 3, **caractérisé par le fait que** l'agent de comblement (7, 7a, 7b) contient de l'humidité ; ou **par le fait que** de l'humidité est ajoutée audit agent de comblement (7, 7a, 7b).

5. Dispositif de fixation selon la revendication 4, **caractérisé par le fait que** l'humidité est constituée d'eau ou d'isopropanol se présentant sous forme liquide, ou sous la forme d'un gel.

6. Dispositif de fixation selon l'une des revendications 1 à 5, **caractérisé par le fait qu'**une substance hydrophile, contenant de l'humidité, est stockée dans les réservoirs (6) en tant qu'agent de comblement (7, 7a, 7b).

7. Dispositif de fixation selon la revendication 6, **caractérisé par le fait que** l'agent de comblement (7, 7a, 7b) est introduit sous pression dans les réservoirs (6).

8. Dispositif de fixation selon l'une des revendications 1 à 5, **caractérisé par le fait qu'**une substance hydrophile ne contenant pas d'humidité est stockée dans les réservoirs (6) ; et **par le fait que** de l'humidité est ajoutée après coup à ladite substance hydrophile.

9. Dispositif de fixation selon la revendication 8, **caractérisé par le fait que** la substance hydrophile est introduite sous pression dans les réservoirs (6).

10. Dispositif de fixation selon l'une des revendications 1 à 3, **caractérisé par le fait qu'**une substance hydrophile, stockée et notamment introduite sous pression dans les réservoirs (6) en tant qu'agent de comblement (7, 7a, 7b), se réchauffe au contact de l'humidité.

11. Dispositif de fixation selon la revendication 10, **caractérisé par le fait que** la substance hydrophile est constituée d'une zéolithe.

12. Dispositif de fixation selon l'une des revendications 1 à 11, **caractérisé par le fait que** les réservoirs (6) sont formés par des évidements cylindriques creux pratiqués dans le corps de base (2).

13. Dispositif de fixation selon l'une des revendications 1 à 12, **caractérisé par le fait que** les réservoirs (6) présentent des formes identiques.

14. Dispositif de fixation selon l'une des revendications 1 à 13, **caractérisé par le fait qu'**un canal de trop-plein (10), se rattachant au bord extérieur de la face de fixation (3), s'étend sur l'intégralité du pourtour de ladite face de fixation (3).

15. Dispositif de fixation selon la revendication 14, **caractérisé par le fait que** le canal de trop-plein (10) est délimité, à sa face extérieure, par un segment marginal (4) du corps de base (2) qui fait saillie au-delà de la face de fixation (3).

16. Dispositif de fixation selon la revendication 15, **caractérisé par le fait qu'**un moyen adhésif est appliqué sur la face extrême libre du segment marginal (4).

17. Dispositif de fixation selon la revendication 16, **caractérisé par le fait que** le moyen adhésif est un ruban adhésif (9).

18. Dispositif de fixation selon l'une des revendications 1 à 17, **caractérisé par le fait que** ce dernier est un adaptateur sur lequel un objet peut être installé.
